# FASCICULE DE BREVET EUROPEEN

(11) **EP 0 881 407 B1**
(45) Date de publication et mention de la délivrance du brevet: **19.03.2003**
(21) Numéro de dépôt: 98401293.0
(22) Date de dépôt: 29.05.1998
(51) Int. Cl.: F16F 7/108, B60R 13/08

(54) **Atténuateur de vibrations pour véhicule automobile**
Dynamischer Schwingungsdämpfer für Kraftfahrzeuge
Dynamic vibration damper for motor vehicles

(30) Priorité: 30.05.1997 FR 9706653
(43) Date de publication de la demande: 02.12.1998
(73) Titulaire: Renault s.a.s., 92100 Boulogne Billancourt (FR)
(72) Inventeur: Lim, Thao, 93800 Epinay sur Seine (FR)

(56) Documents cités:
- EP-A- 0 676 559
- GB-A- 772 130
- US-A- 4 662 432
- US-A- 4 706 788
- US-A- 4 815 556
- US-A- 5 421 087
- PATENT ABSTRACTS OF JAPAN vol. 014, no. 287 (M-0988), 21 juin 1990 & JP 02 089833 A (KINUGAWA RUBBER IND CO LTD), 29 mars 1990
- PATENT ABSTRACTS OF JAPAN vol. 012, no. 466 (M-772), 7 décembre 1988 & JP 63 190945 A (NIPPON FUEROO FURUIDEIKUSU KK), 8 août 1988
- "LES VIBRATIONS NEUTRALISEES PAR DES VIBRATIONS" COMPOSITES PLASTIQUES RENFORCES FIBRES DE VERRE TEXTILE, vol. 33, no. 2, 1 mars 1993, page 108 XP000362627

## Description

La présente invention concerne un ensemble d'atténuation des vibrations d'un groupe motopropulseur de véhicule automobile, et plus particulièrement la solidarisation d'un tel ensemble à la structure du véhicule.

Le document JP-A- 02089833 montre un atténuateur de vibrations.

Les accélérations auxquelles sont soumises les parties mobiles d'un moteur à explosion, telles que les pistons, les bielles ou le vilebrequin sont sources de vibrations et de bruits ; parmi les dispositifs utilisés pour combattre ces vibrations, on trouve les batteurs qui sont des organes dont la fréquence propre est sensiblement égale à la fréquence de résonance des vibrations à traiter, ce qui permet d'atténuer sensiblement l'amplitude des vibrations autour de cette fréquence de résonance.

Ces batteurs sont constitués par des masses dont la valeur dépend de la fréquence ou de la gamme de fréquence des vibrations à traiter et qui sont montés en des points judicieusement choisis du compartiment moteur. A cette fin, ces batteurs sont positionnés au niveau des ventres de vibration au sein du compartiment moteur afin d'en atténuer l'amplitude des vibrations.

Lors d'une collision frontale, un tel batteur qui est un corps dense et de masse assez importante, de l'ordre du kilogramme, favorise l'intrusion dans l'habitacle de la paroi séparant ce dernier du compartiment moteur et augmente donc la probabilité d'occasionner des lésions aux membres inférieurs des occupants du véhicule.

La présente invention a pour objet de pallier l'inconvénient de l'art antérieur et notamment de conserver au batteur des capacités optimales d'atténuation tout en assurant aux occupants une sécurité accrue en cas de choc frontal.

A cet effet, la présente invention propose un atténuateur selon la revendication 1.

Selon une autre caractéristique de la présente invention, le matériau friable est enrobé dans une gangue en résine.

Selon une autre caractéristique de la présente invention, la gangue est reliée à un support par une coiffe en matériau élastomère.

D'autres caractéristiques et avantages de l'invention apparaîtront à la lecture de la description détaillée qui va suivre, pour la compréhension de laquelle on se reportera aux dessins annexés, dans lesquels :
- la figure 1 est une vue simplifiée en perspective de la partie avant gauche du compartiment moteur d'un véhicule automobile au niveau d'un des supports du groupe motopropulseur,

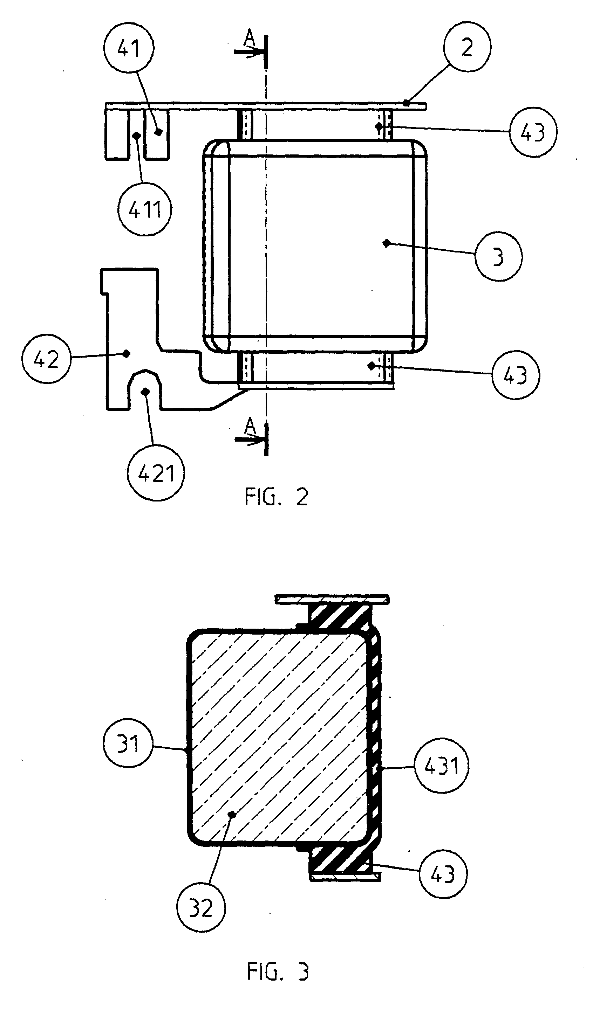

- la figure 2 est une vue de face d'un batteur,
- la figure 3 est une section selon AA de la figure 2,

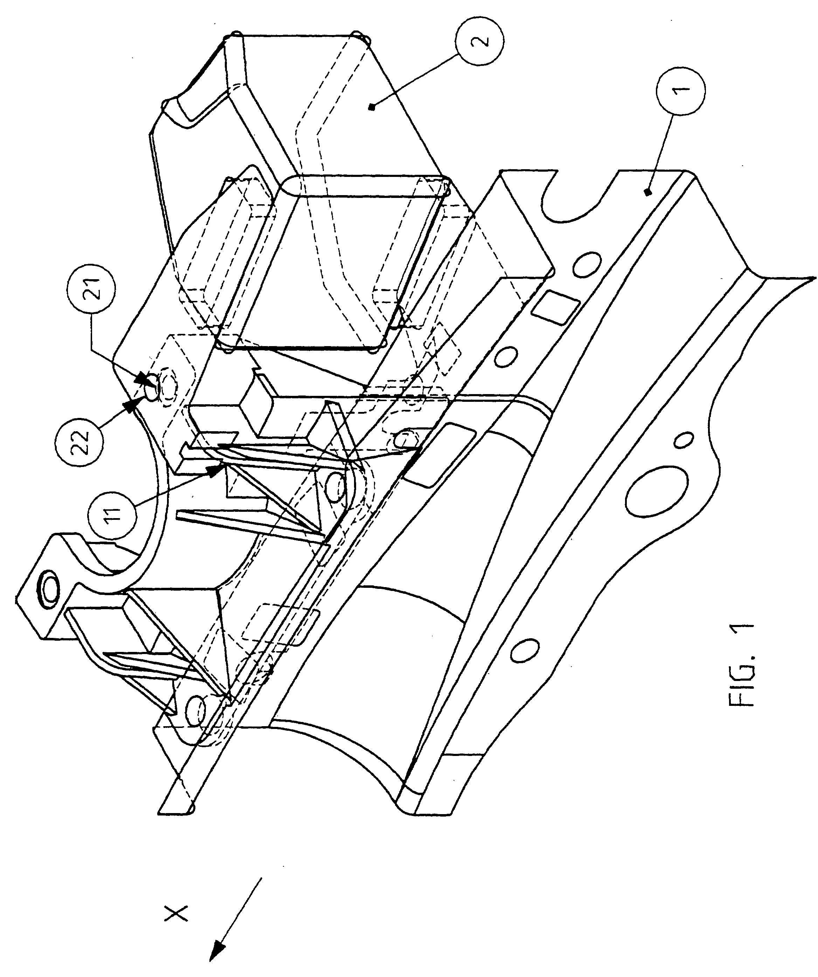

En référence à la figure 1, on a représenté un batteur 2 monté au sein du compartiment moteur d'un véhicule automobile au niveau de la structure avant gauche de la carrosserie du véhicule. L'axe longitudinal du véhicule est indiqué par la flèche référencée X qui est orientée en direction de l'avant du véhicule.

Le batteur 2 est fixé au niveau de la liaison du groupe motopropulseur (non représenté) avec un élément 1 de la structure avant du véhicule par un socle comprenant deux pattes (41,42) de fixation latérales reliées transversalement par une masse 3 d'environ deux kilogrammes présentant une forme sensiblement parallélépipédique. De manière judicieuse, un tel batteur est fixé sur le support du groupe motopropulseur.

L'une des pattes 41 comporte une entaille de positionnement 411 qui coopère avec une nervure 11 formée sur l'élément de structure. Le socle est fixé sur l'élément 1 par une vis 22 qui s'engage dans un perçage de la patte 41.

L'autre patte 42 du socle comporte une encoche 421 dans laquelle vient s'engager un ergot prévu à cet effet sur l'élément 1, lors du montage du batteur 2, ce qui permet d'obtenir une plus grande rigidité de la liaison du batteur 2 sur la structure avant du véhicule.

La masse est constitué d'un bloc 32 de poudre compactée. La poudre peut être constituée de fer ou de tout autre matériau suffisamment dense pour remplir la fonction assignée au batteur dans un volume acceptable. Une telle poudre compactée est par exemple fabriquée par la société SINTERMETAL.

La cohésion des grains de la poudre compactée étant faible, il est nécessaire d'enrober le bloc de poudre d'une enveloppe 31 de protection par rapport aux agressions extérieures.

A cet effet, le bloc de poudre est, de préférence, enrobé dans une gangue en résine.

La liaison de l'ensemble constitué par le bloc de poudre et sa gangue protectrice avec chacune des pattes du socle est assurée à l'aide d'une coiffe 431 en matériau élastomère surmoulé sur la face supérieure de l'ensemble précité.

La coiffe se prolonge, en direction des pattes (41,42) du socle par des éléments 43 en élastomère, en saillie de part et d'autre de deux faces opposées de la coiffe. Les faces de ces éléments en élastomère opposées à la coiffe sont adhérisées ou surmoulées sur la patte correspondante.

Lors du choc, le batteur est porté au contact de l'un des éléments du compartiment moteur, la gangue de protection et de retenue se déchire et la poudre compactée se désagrège.

En permettant cette désagrégation de la masse du batteur lors d'un choc, le dispositif selon l'invention permet une réduction significative de l'intrusion de la paroi de séparation du compartiment moteur et de l'habitacle en cas de choc frontal, l'espace de survie des passagers du véhicule s'en trouve donc accru.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Atténuateur de vibrations pour véhicule automobile, comprenant un batteur (2) constitué par un bloc (32), l'agencement au sein du compartiment moteur du batteur et la masse du bloc dépendant de la gamme de fréquence des vibrations à atténuer, **caractérisé en ce que** le bloc (32) est constitué d'un matériau friable apte à désagréger sous l'effet d'un choc.

2. Atténuateur selon la revendication 1, **caractérisé en ce que** le bloc (32) est enrobé dans une gangue de protection (31).

3. Atténuateur selon la revendication 2, **caractérisé en ce que** la gangue est reliée à un support par une coiffe (431) en matériau élastomère.

## Claims

1. A vibration attenuator for a motor vehicle comprising a damper (2) formed by a block (32), the arrangement within the engine compartment of the damper and the mass of the block depending on the range of frequencies of the vibrations to be attenuated, **characterised in that** the block (32) is formed by a friable material capable of disintegrating under the effect of an impact.

2. An attenuator according to claim 1 **characterised in that** the block (32) is encased in a protective sheath (31).

3. An attenuator according to claim 2 **characterised in that** the sheath is connected to a support by a cover (431) of elastomer material.

## Patentansprüche

1. Schwingungsdämpfer für Kraftfahrzeuge, der einen Batteur (2) aufweist, bestehend aus einem Block (32), wobei die Anordnung des Batteur und der Blockmasse im Inneren des Motorraums vom Frequenzbereich der zu dämpfenden Schwingungen abhängt, **dadurch gekennzeichnet, dass** der Block (32) aus einem bröckeligem Material besteht, das unter der Wirkung eines Stoßes zerfällt.

2. Dämpfer nach Anspruch 1, **dadurch gekennzeichnet, dass** der Block (32) mit einer Schutzmasse (31) umhüllt ist.

3. Dämpfer nach Anspruch 2, **dadurch gekennzeichnet, dass** die Schutzmasse mit einer Halterung über einen Deckel (431) aus einem Elastomer verbunden ist
